Europäisches Patentamt

European Patent Office

Office européen des brevets

(19)

(11) Publication number: **0 165 034 B1**

# EUROPEAN PATENT SPECIFICATION

(45) Date of publication of patent specification: **28.08.91**  (51) Int. Cl.⁵: **C04B 7/43, F27B 15/00**

(21) Application number: **85304090.5**

(22) Date of filing: **10.06.85**

(54) **Method and apparatus for producing white cement clinker.**

(30) Priority: **11.06.84 JP 118345/84**

(43) Date of publication of application:
**18.12.85 Bulletin  85/51**

(45) Publication of the grant of the patent:
**28.08.91 Bulletin  91/35**

(84) Designated Contracting States:
**DE FR GB**

(56) References cited:
EP-A- 0 000 739        EP-A- 0 033 688
FR-A- 2 073 919        US-A- 3 085 022
US-A- 3 922 797        US-A- 4 101 337

(73) Proprietor: **ISHIKAWAJIMA-HARIMA JUKOGYO KABUSHIKI KAISHA**
**2-1, Ote-machi 2-chome**
**Chiyoda-ku Tokyo 100(JP)**

Proprietor: **CHICHIBU CEMENT KABUSHIKI KAISHA**
**c/o Nihon Kogyo Club 4-6 Marunouchi 1-chome**
**Chiyoda-ku Tokyo(JP)**

(72) Inventor: **Ichiyanagi, Toshikazu**
**No. 1, 2-chome Tsukimi-cho**
**Kumagaya-shi Saitama-ken(JP)**
Inventor: **Sudo, Kanzaburo**
**No. 604, Watase Kamikawa-mura**
**Kodama-gun Saitama-ken(JP)**
Inventor: **Kawai, Zenzaburo**
**No. 1100-140, Kamino**
**Kumagaya-shi Saitama-ken(JP)**
Inventor: **Sekine, Shoji**
**No. 13-6, 3-chome Kitano**
**Niiza-shi Saitama-ken(JP)**
Inventor: **Teshigawara, Hiroshi**
**No. 1-39, 4-chome, Yasaka-cho**
**Koshigaya-shi Saitama-ken(JP)**

(74) Representative: **Jennings, Nigel Robin et al**
**KILBURN & STRODE 30 John Street**
**London WC1N 2DD(GB)**

## Description

The present invention relates to a method and apparatus for producing white cement clinker.

In the production of white cement clinker, it is desirable that not only the strength of the final product but also that the degree of whiteness be as high as possible. In order to improve the whiteness, raw materials should apparently contain as little iron and manganese as possible. It is necessary to rapidly cool the clinker after it has been burned in a reducing atmosphere or has been initially burned in an oxidizing atmosphere and then subjected to a reduction process by spraying with a fuel such as heavy oil. It is well known that a rapid cooling of the clinker to a temperature below 700°C must be effected whilst preventing contact of the clinker with air otherwise the clinker would be re-oxidized by oxygen contained in the air.

Conventionally, rotary kilns have been used to produce white cement clinker. Clinker discharged from a rotary kiln is immersed in water so as to cool it while preventing it from coming into contact with air. Since clinker burned in a rotary kiln has a wide range of particle sizes, it cannot be cooled uniformly. If clinker of a coarse particle size is immersed in water for a long period of time to be cooled to a temperature below 700°C, a large volume of water is needed and clinker of a finer particle size is overcooled. Furthermore, the overall temperature of the clinker drops too low so that the sensible heat of the clinker cannot be used to preheat the combustion air. When clinker is recovered from the water, water adheres to it so that there arises the problem that the strength of the cement is degraded. In addition, a large quantity of steam is produced due to the thermal exchange between the water and the high-temperature clinker and this enters the rotary kiln so that the heat consumption of the rotary kiln is increased. On the other hand, if the quantity of water is decreased, the clinker of the smaller particle size is satisfactorily cooled but the coarser clinker is not satisfactorily cooled so that when it comes into contact with air, it is re-oxidized and consequently its whiteness is degraded. In order to overcome the problems referred to above, the clinker must be so burned as to have a uniform particle size, but it is impossible to do so by burning in a rotary kiln.

In the method disclosed in laid open Japanese Patent Application No. 26057/1983, clinker of a small particle size is discharged from a kiln through an annular discharge gap located at a position spaced from the discharge end of the kiln by a distance substantially equal to the radius of the kiln and is directed to fall upon the upper part of a conveyor which is inclined at an angle and disposed in a water chamber. Clinker of a coarse particle size is discharged from the discharge end of the kiln and is sorted or classified by a sorting or classifying screen and then dropped onto the conveyor such that the coarser the particle size of the clinker the lower the position on the conveyor on which the clinker is dropped. In other words, the period of time for which clinker of a smaller particle size is immersed in the water is relatively short and the coarser the particle size of the clinker the longer it is immersed in the water so that all the clinker particles are uniformly cooled. However, the clinker particles cannot in practice be satisfactorily sorted or classified by the discharge gap and the sorting or classifying screen so that the method does not work effectively.

It is an object of the present invention to overcome the problem of the known methods in that the clinker is not uniformly cooled because the burned clinker has a wide range of particle sizes. It is a further object to overcome the further problems of the known methods that the heat consumption of the kiln is increased and that the whiteness is degraded.

According to the present invention a method of producing white cement clinker includes the steps of feeding raw material particles into a fluidised bed furnace and burning them into clinker particles, permitting the clinker particles to fall through an injection pipe, which communicates with the bottom of the furnace into a reduction chamber situated below the fluidised bed furnace, causing reducing gas to flow up through the injection pipe with such a speed that substantially only those clinker particles in the furnace which are of the desired size can fall down into the reduction chamber, reducing the clinker particles in the reduction chamber with reduction gas, feeding the reduced clinker particles into a primary cooling chamber and cooling them to 600-700° whilst substantially isolating them from contact with air and then feeding the clinker particles into a secondary cooling chamber and cooling them further with air.

The flow of reduction gas into the fluidised bed furnace thus serves to classify the clinker particles and ensures that once the clinker particles have reached a size predetermined by the velocity of the reducing gas they will fall down under gravity into the reduction chamber.

The reducing gas may be produced directly in a reduction chamber by incompletely burning a fuel in the reduction chamber or alternatively it may be produced in a separate furnace and then fed into the reduction chamber.

The present invention also embraces apparatus for carrying out the method and such apparatus may include a fluidised bed furnace for burning white cement raw material particles into clinker particles, a reduction chamber situated below the furnace for reducing the clinker particles, an injection pipe extending between the bottom of the furnace and the top of the reduction chamber through which, in use, reducing gas flows, a primary cooling chamber communicating with the reduction chamber and including means for spraying water to cool the clinker particles whilst substantially isolating them from contact with air, a secondary cooling chamber communicating with the primary cooling chamber and including means for supplying air to further cool the clinker particles, and feed means situated between the primary and secondary cooling chambers for feeding a predetermined quantity of clinker particles.

The reduction chamber may include means for the injection of fuel which is then partially burnt to produce reduction gas. Alternatively there may be a separate reducing gas generating furnace connected to the reduction chamber.

Preferably, a pipe extends between the secondary cooling chamber and furnace for supplying heated air from the former for use as combustion air in the latter.

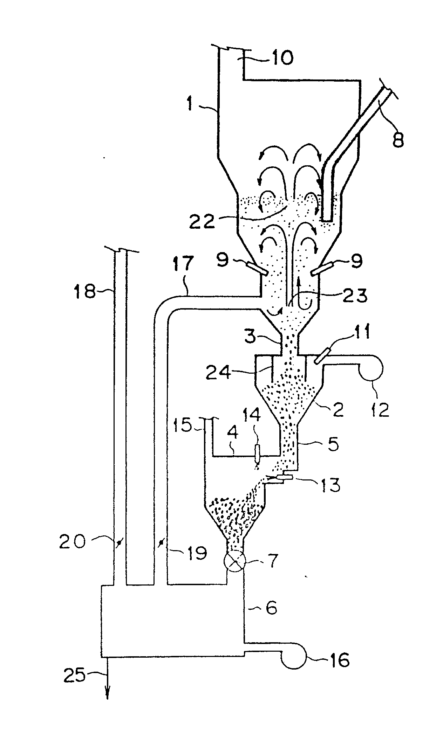

Further features and details of the invention will be apparent from the following description of one specific embodiment which is given by way of example with reference to the accompanying single Figure which is a schematic view of an apparatus for carrying out a white cement clinker production method in accordance with the present invention.

The apparatus includes a fluidised bed burning furnace for burning the white cement raw materials in powder form into clinker; a reduction chamber 2 in which the clinker is subjected to a reduction process; a jet injection pipe 3 connecting the top of the reduction chamber 2 and the bottom of the furnace 1 whereby, in use, the reducing gas produced in the reduction chamber 2 is forced into the furnace 1 as a jet stream of reducing gas; a primary cooling chamber 4 in which water is sprayed to cool the hot reduced clinker from the reduction chamber 2; a chute 5 connecting the bottom of the reduction chamber 2 and the primary cooling chamber 4; a secondary cooling chamber 6 where cooled clinker from the primary cooling chamber 4 is cooled again with air; and a device 7, in this case a rotary feeder, interposed between the cooling chambers 4 and 6 for delivering a predetermined quantity of clinker. The furnace includes a raw material feed pipe 8 for supplying the raw materials, burners 9 and a combustion gas discharge pipe 10 whose upper end is not shown. The reduction chamber 2 includes a burner 11 extending through its roof and a fan 12 for feeding the air for partial combustion into the reduction chamber 2. The primary cooling chamber 4 includes primary cooling water spraying devices 13 and 14, in this case nozzles, and a steam discharge pipe 15 for discharging the steam produced by the water spray from the production apparatus. The secondary cooling chamber 6 includes a fan 16 for supplying cooling air and gas discharge pipes 17 and 18 which are connected to the furnace 1 and to a calcination furnace or chamber (not shown) respectively. The pipes 17 and 18 include respective dampers 19 and 20 for controlling the flow rate of the gas passing through them.

The mode of operation of the apparatus is as follows: The raw materials for white cement which have been calcined in the calcination furnace or chamber (not shown) is passed in powder form through the feed pipe 8 into a dense layer 22 of particles in the fluidized furnace 1. In general, the powder of raw materials contains a suitable quantity of seed clinker which becomes seeds for the clinker particles. The upward flow rate of gas in the layer 22 is higher than the minimum fluidization velocity at which the raw material particles are fluidized and thus these particles remain in a fluidized state in the layer 22 and form a dense fluidized bed. The flow rate of gas is greater at the centre of the fluidized bed than at the periphery so that the bed is in the nature of a spout in which the particles are blown upwards at the centre by the gas flow but drop down around the periphery. The raw material particles are thus circulated.

Seed clinker particles are larger than the raw material particles so that they pass down through the dense layer 22 and reach a relatively thin layer 23 whilst coming into contact with raw material particles.

In a manner similar to the layer 22, the thin layer 23 constitutes a spout-like fluidized bed, but the flow rate of gas in the thin layer 23 is faster than that in the dense layer 22 so that the seed clinker particles are blown upwards by the flow of gas back into the dense layer 22. In the dense layer 22, they contact the raw material particles and return to the thin layer 23. The fuel injected through the nozzles 9 is burned with the air which flows in through the gas discharge pipe 17 from the secondary cooling chamber 6 so that both the dense and thin layers 22 and 23 are constantly maintained at a temperature of about 1400°C, so that while the raw material particles are circulated between the thin and dense layers 23 and 22 they become clinker particles formed around clinker seeds and grow gradually into particles 3 to 5 mm in diameter. When the clinker particles attain a certain size they come to have a terminal velocity faster than that of the reducing gas injected through the jet injection pipe 3 from the reduction chamber 2 so that they drop through the jet injection pipe 3. The desired particle size of the clinker particles can be obtained by controlling the flow rate of the reducing gas flowing through the jet injection pipe 3.

While the clinker particles are dropping through the jet injection pipe 3, they are subjected to reduction by the reducing gas and then drop into the reduction chamber 2. The reduction chamber 2 has a cylindrical upper portion within which is an inner coaxial cylinder 24 and a frusto-conical lower portion. The diameter of the cylinder 24 is greater than that of the jet injection pipe 3. The fan 12 supplies air into the reduction chamber 2 in a quantity which is insufficient to completely burn the fuel injected through the nozzle or burner 11, resulting in incomplete combustion. A reducing gas is thus produced and injected through the jet injection pipe 3 and inner cylinder 24 into the furnace 1. The level of the clinker in the reduction chamber 2 is maintained between the upper and lower ends of the cylinder 24 by controlling the quantity of clinker forcibly discharged through the chute 5 into the primary cooling chamber 4 so that the velocity of the gas flowing through the cylinder 24 is made equal to a minimum fluidization velocity at which clinker particles of the desired particle size start to be fluidized. As a result, the clinker particles are fluidized by the reducing gas within the inner cylinder 24 and are therefore reduced. Clinker particles whose size is smaller than the desired size and any raw material particles which may have been attached to the clinker particles and then became separated are entrained and blown upwards by the reducing gas into the fluidized bed in the furnace 1. The clinker particles are thus classified by the reducing gas in the lower portion of the furnace 1 and the reduction chamber 2 so that relatively fine clinker particles whose size distribution is extremely narrow are obtained. These clinker particles are brought into contact in a fluidized state with the reducing gas so that they are uniformly reduced. In this embodiment, the reducing gas is produced in the reduction chamber 2, but it will be understood that a separate reducing gas generating furnace may be provided and the reducing gas produced in this furnace is fed into the reduction chamber 2.

The clinker particles which have been reduced in the reduction chamber 2 fill the chute 5 and gradually fall down. They are forcibly discharged into the primary cooling chamber 4 by the pressure of the cooling water injected through the nozzle 13 and are cooled also by water sprayed through the nozzle 14. It will be understood that any other suitable rotary or reciprocal mechanical means may be used to forcibly discharge the clinker particles from the chute 5 into the chamber 4.

In the cooling chamber 4, the particle size of the clinker particles is relatively small and the size distribution is extremely narrow so that the particles can be uniformly cooled. The sprayed water is instantaneously evaporated into high temperature superheated steam which fills the primary cooling chamber 4. As a result, the clinker particles are isolated from the surrounding atmosphere so that they are prevented from coming into contact with air and thus from being oxidized. The pressure in the primary cooling chamber 4 rises so that the steam is discharged through the steam discharge pipe 15 to the exterior. In order to prevent the reducing gas produced in the reduction chamber 2 from flowing through the chute 5 into the primary cooling chamber 4, the quantity of steam discharged is so controlled that the pressure in the cooling chamber 4 is balanced with that in the reduction chamber 2.

Water is sprayed in the primary cooling chamber 4 so that the hot clinker particles are rapidly cooled to between 600 and 700°C. The cooled clinker particles are then discharged by the rotary feeder 7 into the secondary cooling chamber 6. Air is supplied by the fan 16 into the chamber 6 so that the clinker particles are further cooled to between 100 and 150°C and are then discharged through a discharge port 25. The clinker particles are already cooled to 600-700°C before they are fed into the secondary cooling chamber 6 so that even when they are cooled with air in the chamber 6, they are not oxidized. The air in the chamber 6 is heated by the clinker particles and is partially discharged through the discharge pipe 17 into the furnace 1 as combustion air. The remainder of the air is discharged through pipe 18 into the calcination furnace (not shown) as combustion air.

Thus, according to the present invention, the clinker particles are burned in a fluidized bed furnace, not a rotary kiln, so that white cement clinker particles of uniform particle size, ie. of narrow particle size distribution are obtained. The clinker particles are reduced by a reducing gas and then cooled firstly by sprayed water and then by air and are thus not immersed in the water. More specifically, water is sprayed in the primary cooling chamber so that the clinker particles are first cooled to 600-700°C and consequently the steam is produced instantaneously and fills the chamber 6. As a result, the clinker particles are rapidly cooled whilst isolated from the atmosphere so that they are prevented from being oxidized. As a result, they are uniformly cooled and have a higher degree of whiteness and the quantity of water used is reduced. After the clinker particles have been cooled in the primary cooling chamber, they are passed into the second cooling chamber and air cooled but are not oxidized. The air which is heated by heat exchange with the clinker particles can be used as combustion air so that the sensitive heat of the clinker particles may be effectively utilized.

## Claims

1. A method of producing white cement clinker including the steps of feeding raw material particles into a fluidised bed furnace (1) and burning them into clinker particles, permitting the clinker particles to fall through an injection pipe (3), which communicates with the bottom of the furnace (1) into a reduction chamber (2) situated below the fluidised bed furnace (1), causing reducing gas to flow up through the injection pipe (3) with such a speed that substantially only those clinker particles in the furnace (1) which are of the desired size can fall down into the reduction chamber (2), reducing the clinker particles in the reduction chamber (2) with reducing gas, feeding the reduced clinker particles into a primary cooling chamber (4) and cooling them to 600-700° whilst substantially isolating them from contact with air and then feeding the clinker particles into a secondary cooling chamber (6) and cooling them further with air.

2. A method as claimed in claim 1 characterised in that the reducing gas is produced in the reduction chamber (2) by incompletely burning a fuel in the reduction chamber.

3. A method as claimed in claim 1 characterised in that the reducing gas is produced in a reducing gas generating furnace and then fed into the reduction chamber (2).

4. A method as claimed in any one of the preceding claims, characterised in that the clinker particles are cooled in the primary cooling chamber (4) by spraying them with water.

5. Apparatus for producing white cement clinker including a fluidised bed furnace (1) for burning white cement raw material particles into clinker particles, a reduction chamber (2) situated below the furnace (1) for reducing the clinker particles, an injection pipe (3) extending between the bottom of the furnace (1) and the top of the reduction chamber (2) through which, in use, reducing gas flows, a primary cooling chamber (4) communicating with the reduction chamber (2) and including means (13,14) for spraying water to cool the clinker particles whilst substantially isolating them from contact with air, a secondary cooling chamber (6) communicating with the primary cooling chamber (4) and including means (16) for supplying air to further cool the clinker particles, and feed means (7) situated between the primary and secondary cooling chambers (4,6) for feeding a predetermined quantity of clinker particles.

6. Apparatus as claimed in claim 5 characterised in that the reduction chamber (2) includes means (11) for the injection of a fuel.

7. Apparatus as claimed in claim 5 characterised by a separate reducing gas generating furnace connected to the reduction chamber (2).

8. Apparatus as claimed in any one of claims 5 to 7, characterised by a pipe (17) extending between the secondary cooling chamber (6) and furnace (1) for supplying heated air from the former for use as combustion air in the latter.

## Revendications

1. Procédé de fabrication de clinker de ciment blanc comprenant les phases de: fourniture de particules de matière première à un four (1) à lit fluidifié et leur grillage pour en faire des particules de clinker, chute des particules de clinker dans un tuyau d'injection (3) qui communique avec le fond du four (1) en pénétrant dans une chambre de réduction (2) placée endessous du four (1) à lit fluidifié , faire remonter le gaz réducteur par le tuyau d'injection (3) avec une vitesse telle que ce ne sont sensiblement que les particules de clinker du four (1) qui présentent la grosseur souhaitée qui peuvent retomber dans la chambre de réduction (2), réduction des particules de clinker dans la chambre de réduction (2) au moyen d'un gaz réducteur, apport des particules de clinker réduit dans une chambre de refroidissement primaire (4) et leur refroidissement à 600-700° C tout en les isolant sensiblement de tout contact avec l'air, puis apport des particules de clinker dans une chambre de refroidissement secondaire (6) pour poursuivre le refroidissement à l'air.

2. Procédé selon la revendication 1. caractérisé en ce que le gaz réducteur est produit dans la chambre de réduction (2) par combustion incomplète d'un combustible dans la chambre de réduction.

3. Procédé selon la revendication 1, caractérisé en ce que le gaz réducteur est produit dans un four de production de gaz réducteur, puis est fourni à la chambre de réduction (2).

4. Procédé selon l'une quelconque des revendications précédentes, caractérisé en ce que les particules de clinker sont refroidies dans la chambre de refroidissement primaire (4) par pulvérisation d'eau.

5. Appareil pour la fabrication de clinker de ciment blanc comprenant un four à lit fluidifié (1) pour le grillage de particules de matière première de ciment blanc pour les transformer en particules de clinker, une chambre de réduction (2) placée en-dessous du four (1) pour la réduction des particules de clinker, un tuyau d'injection (3) s'étendant entre le fond du four (1) et le sommet de la chambre de réduction (2) par lequel, en fonctionnement, s'écoule le gaz réducteur, une chambre de refroidissement primaire (4), communiquant avec la chambre de réduction (2) et comprenant un moyen (13,14)de pulvérisation d'eau afin de refroidir les particules de clinker tout en les isolant sensiblement d'un contact avec l'air, une chambre de refroidissement secondaire (6) communiquant avec la chambre de refroidissement primaire (4) et comprenant un moyen de fourniture d'air (16)pour continuer le refroidissement des particules de clinker, et un moyen d'alimentation (7), placé entre les chambres de refroidissement primaire et secondaire (4,6) pour la fourniture d'une quantité prédéfinie de particules de clinker.

6. Appareil selon la revendication 5, caractérisé en ce que la chambre de réduction (2) contient un moyen (11) d'injection de combustible.

7. Appareil selon la revendication 5, caractérisé par la présence d'un four distinct pour la production de gaz réducteur, communiquant avec la chambre de réduction (2).

8. Appareil selon l'une quelconque des revendications 5 à 7, caractérisé par un tuyau (17) s'étendant entre la chambre de refroidissement secondaire (6) et le four (1) en vue de la fourniture d'air chaud provenant du premier pour servir d'air de combustion dans le second.

**Patentansprüche**

1. Verfahren zur Herstellung von weissen Zementklinkern durch Einleiten von Rohmaterialpartikeln in einen Wirbelbettofen (1) und Brennen derselben zu Klinkerpartikeln, Fallenlassen der Klinkerpartikel durch ein Einspritzrohr (3), das mit dem Boden des Ofens (1) verbunden ist, hinein in eine Reduktionskammer (2), die unter dem Wirbelbettofen (1) angeordnet ist, Aufwärtsleiten von reduzierendem Gas durch das Einspritzrohr (3) mit einer solchen Strömungsgeschwindigkeit, dass nur solche Klinkerpartikel im Ofen (1) nach unten in die Reduktionskammer (2) fallen können, welche im wesentlichen die gewünschte Partikelgrösse besitzen, Reduktion der Klinkerpartikel in der Reduktionskammer (2) mit reduzierendem Gas, Einleiten der reduzierten Klinkerpartikel in eine Primärkühlkammer (4) und Kühlung derselben auf 600 bis 700°C während sie gegen einen Kontakt mit Luft im wesentlichen isoliert werden, und anschliessend Einleiten der Klinkerpartikel in eine Sekundärkühlkammer (6) und weitere Kühlung derselben mit Luft.

2. Verfahren nach Anspruch 1,
**dadurch gekennzeichnet,**
dass das reduzierende Gas in der Reduktionskammer (2) durch unvollständige Verbrennung eines Brennstoffs in der Reduktionskammer erzeugt wird.

3. Verfahren nach Anspruch 1,
**dadurch gekennzeichnet,**
dass das reduzierende Gas in einem reduzierendes Gas erzeugenden Ofen hergestellt und anschliessend in die Reduktionskammer eingeleitet wird.

4. Verfahren nach einem der vorhergehenden Ansprüche,
**dadurch gekennzeichnet,**
dass die Klinkerpartikel in der Primärkühlkammer (4) durch Besprühen mit Wasser gekühlt werden.

5. Vorrichtung zur Herstellung von weissen Zementklinkern mit einem Wirbelbettofen (1) zum Brennen von Weisszement-Rohmaterialpartikeln zu Klinkerpartikeln, einer Reduktionskammer (2), die unter dem Ofen (1) angeordnet und zur Reduktion der Klinkerpartikel vorgesehen ist, einem Einspritzrohr, das sich zwischen dem Boden des Ofens (1) und der Oberseite der Reduktionskammer (2) erstreckt, durch welches während des Betriebes reduzierendes Gas strömt, einer Primärkühlkammer (4), die mit der Reduktionskammer (2) verbunden ist und eine Einrichtung (13, 14) zum Sprühen von Wasser zum Kühlen der Klinkerpartikel enthält, während diese gegen Kontakt mit Luft im wesentlichen isoliert sind, einer Sekundärkühlkammer (6), die mit der Primärkühlkammer (4) verbunden ist und eine Einrichtung (16) zur Zufuhr von Luft zur weiteren Kühlung der Klinkerpartikel enthält, und einer Fördereinrichtung (7), die zum Befördern einer vorbestimmten Menge von Klinkerpartikeln zwischen der Primär- und der Sekundärkühlkammer (4, 6) angeordnet ist.

6. Vorrichtung nach Anspruch 5,
   **dadurch gekennzeichnet**,
   dass die Reduktionskammer (2) eine Einrichtung (11) zum Einspritzen eines Brennstoffs enthält.

7. Vorrichtung nach Anspruch 5,
   **gekennzeichnet durch**
   einen getrennten, reduzierendes Gas erzeugenden Ofen, der an die Reduktionskammer angeschlossen ist.

8. Vorrichtung nach einem der Ansprüche 5 bis 7,
   **gekennzeichnet durch**
   ein Rohr (17), das sich zur Lieferung erwärmter Luft von der Sekundärkühlkammer (6) zur Verwendung als Verbrennungsluft im Ofen (1) zwischen der Sekundärkühlkammer und dem Ofen erstreckt.